# EUROPEAN PATENT APPLICATION

(11) **EP 4 046 901 A1**
(43) Date of publication of application: **24.08.2022**
(21) Application number: 21184556.5
(22) Date of filing: 08.07.2021
(51) Int. Cl.: B63B 1/38

(54) **AIR SUPPLY APPARATUS FOR A SHIP, SHIP INCLUDING THE SAME, AND METHOD OF INSTALLING A FUEL CELL IN AN AIR SUPPLY APPARATUS**

(30) Priority: 17.02.2021 EP 21163163
(71) Applicant: Turbo Systems Switzerland Ltd., 5400 Baden (CH)
(72) Inventor: TISSOT, Jean-Francois, 68750 Bergheim (FR); KEINAENEN, Jari, 5200 Brugg (CH); RUSCH, Daniel, 5430 Wettingen (CH)
(74) Representative: Zimmermann & Partner Patentanwälte mbB

(57) **Abstract**

An air supply apparatus (100) for a ship is described. The air supply apparatus (100) includes a fuel cell (110), an air lubrication device (120) for resistance reduction of the ship (400) and a compressor (130) connected to a pressurised line system (112, 114, 212, 214, 215, 216) for providing pressurised fluid to the pressurised line system (112, 114, 212, 214, 215, 216). The pressurised line system (112, 114, 212, 214, 215, 216) is connected to the fuel cell (110) for providing the fuel cell (110) with pressurised fluid from the compressor (130). The pressurised line system (112, 114, 212, 214, 215, 216) is further connected to the air lubrication device (120) for providing pressurised fluid to the air lubrication device (120). Further, a ship (400) comprising an air supply apparatus (100) as well as a method of installing a fuel cell (110) in an air supply apparatus are described herein.

## Description

### TECHNICAL FIELD

Embodiments of the present disclosure relate to an air supply apparatus of an air lubrication type ship for reducing water friction resistance. Further, embodiments of the present disclosure relate to a method of installing a fuel cell in an air supply apparatus.

### BACKGROUND

Generally, a ship receives friction resistance of water during marine navigation on its submerged surface of the ship's bottom. Especially for large ships, e.g. cargo ships, a large portion of the ship's hull resistance results from friction resistance generated by relative flow of outside water at the ship's bottom.

To reduce ship's hull friction resistance air lubrication can be used, particularly by discharging air into surroundings of the ship's hull. The reduction of friction resistance has a large fuel economy improving effect, and thus represents effective means to reduce the CO₂ emission of the ship.

In the state of the art, there are various systems and approaches for the production of air bubbles for the hull lubrication. For instance, for the generation of air bubbles for hull lubrication, the prior art teaches usage of separate or dedicated mechanical electrical compressors or blowers.

However, there is a continuous demand for improved methods and systems for hull lubrication, particularly with respect to energy consumption and eco friendliness.

### SUMMARY

In light of the above, an air supply apparatus for a ship, a ship including the air supply apparatus, and a method of installing a fuel cell in an air supply apparatus according to the independent claims are provided. Further aspects, advantages, and features are apparent from the dependent claims, the description, and the accompanying drawings.

According to an aspect of the present disclosure, an air supply apparatus for a ship is provided. The air supply apparatus includes a fuel cell, an air lubrication device for resistance reduction of the ship, and a compressor connected to a pressurised line system for providing pressurised fluid to the pressurised line system. The pressurised line system is connected to the fuel cell for providing the fuel cell with pressurised fluid from the compressor. The pressurised line system is further connected to the air lubrication device for providing pressurised fluid to the air lubrication device.

Accordingly, compared to conventional apparatuses used for air lubrication type ships, the air supply apparatus of the present disclosure is improved with respect to energy consumption and eco friendliness.

According to a further aspect of the present disclosure, a ship including an air supply apparatus according to any embodiments described herein is provided.

According to another aspect of the present disclosure, a method of installing a fuel cell in an air supply apparatus for a ship is provided. The air supply apparatus includes an air lubrication device for resistance reduction of the ship, and a compressor for providing the air lubrication device with pressurised fluid. The method includes connecting the compressor outlet and an inlet of the fuel cell via an intake gas line or a bifurcated intake gas line. The method further includes connecting an inlet of the air lubrication device with an exhaust gas outlet of the fuel cell via an exhaust gas line or connecting an inlet of the air lubrication device with the compressor outlet via the bifurcated intake gas line.

Those skilled in the art will recognise additional features and advantages upon reading the following detailed description, and upon viewing the accompanying drawings.

### BRIEF DESCRIPTION OF THE DRAWINGS

The components in the Figures are not necessarily to scale, instead emphasis being placed upon illustrating the principles of the invention. Moreover, in the Figures, like reference signs designate corresponding parts. The accompanying drawings relate to embodiments of the disclosure and are described in the following:
- Fig. 1: shows a schematic view of a ship with an air supply apparatus according to embodiments described herein;
- Fig. 2a: shows a schematic view a ship with an air supply apparatus according to further embodiments described herein;
- Fig. 2b: shows a schematic view a ship with an air supply apparatus according to further embodiments described herein;
- Fig. 3: shows a schematic view a ship with an air supply apparatus according to further embodiments described herein;
- Fig. 4: shows a schematic view a ship with an air supply apparatus according to further embodiments described herein;

- Fig. 5: shows a schematic view a ship with an air supply apparatus according to further embodiments described herein;
- Fig. 6: shows a schematic view a ship with an air supply apparatus according to further embodiments described herein; and
- Fig. 7: shows a schematic view a ship with an air supply apparatus according to further embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

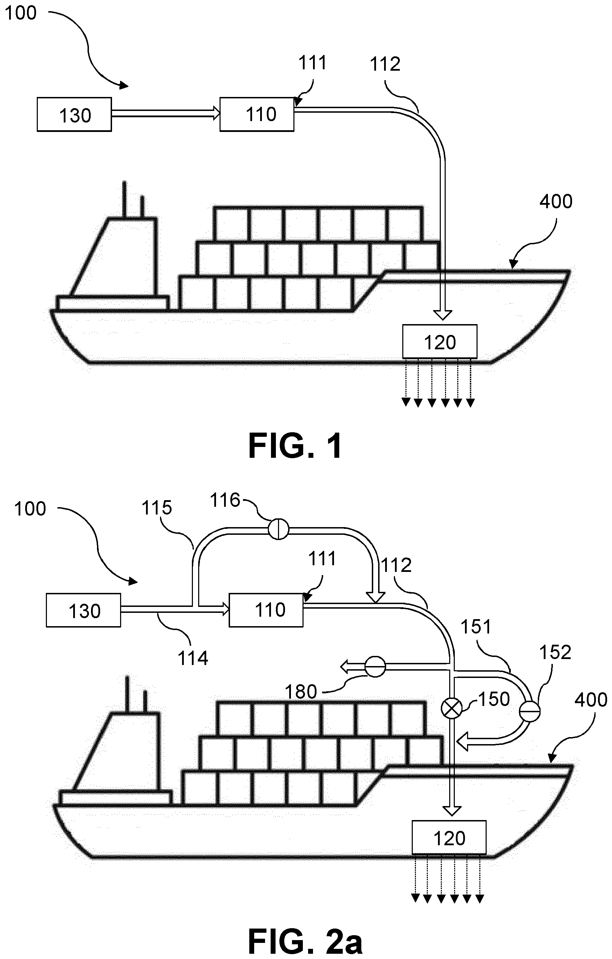

With exemplary reference to Fig. 1, an air supply apparatus 100 for a ship 400 according to the present disclosure is described. According to embodiments, which can be combined with other embodiments described herein, the air supply apparatus 100 includes a fuel cell 110 and an air lubrication device 120 for resistance reduction of the ship 400.

In particular, the air lubrication device 120 is configured for air bubble generation for hull lubrication. Typically, the air lubrication device is configured for generating or forming an air layer on a bottom surface of the hull by discharging air to an outer surface below a waterline of the hull. In other words, lubrication can be used to reduce the ship's hull friction resistance air, particularly by discharging air into surroundings of the ship's hull, especially under the hull. Beneficially, frictional resistance between the ship and water can be reduced. Hull drag commonly represents the main fraction of the ship fuel consumption. Illustratively, injecting air bubbles under the hull may improve the consumption of a ship by up to about 10%. The fuel consumption by means of injecting air bubbles can be improved for essentially all types of ships regardless of the mode of propulsion (Diesel, gas, electric with battery, fuel cell, hybrid).

Although the term "air" lubrication device 120 is used throughout this application, the "air" lubrication device 120 is not limited to applications with air. For example, and as discussed further below, the exhaust gas originating from the fuel cell 110 may be introduced (optionally in a further pressurised manner) into the air lubrication device 120. In this case, the exhaust gas may simply correspond to air, it may, however, also correspond to (highly) humid air, or may contain further gases or particles (the particles are in such a case typically not environmentally harmful). Thus, although air is preferably used, the "air" lubrication device 120 may be fully operational with any type of pressurised fluid, and is not limited to being operated with air.

For the purpose of generating gaseous bubbles, the air supply apparatus 100 includes a compressor 130. The compressor 130 is connected to a pressurised line system for providing pressurised fluid to the pressurised line system. The pressurised line system may correspond to a manifold of several individual gas lines or line sections, such as, but not limited to one or more of an exhaust gas line 112, 212, an intake gas line 114, a bifurcated intake gas line 214, a first branch-off intake line 215, and a second branch-off intake line 216.

In the exemplary embodiment shown in Fig. 1, the pressurised line system includes an exhaust gas line 112 and an intake gas line fluidly connecting the compressor and the fuel cell 110 (not labelled with a reference numeral).

The pressurised line system 112, 114, 212, 214, 215, 216 is further connected to the fuel cell 110 for providing the fuel cell 110 with pressurised fluid from the compressor 130. In other words, the fuel cell 110 is a pressurised fuel cell which can (in some embodiments) be beneficial for supplying the air lubrication device with a pressurised flow. Accordingly, the energy efficiency of the ship may be improved. Further, the global carbon footprint of the ship can be reduced. Pressurization of the fuel cell is advantageous for fuel cell efficiency and power density improvements.

The pressurised fluid provided to the fuel cell 110 is typically compressed air. In the simplest embodiment, a compressor outlet and an inlet of the fuel cell 110 may be directly connected by the intake gas line, as illustrated in Figure 1. In other embodiments, further components may be arranged in the gas line connecting compressor and fuel cell 110, as described further below.

The pressurised line system 112, 114, 212, 214, 215, 216 is further connected to the air lubrication device 120 for providing pressurised fluid to the air lubrication device 120. The pressurised fluid conveyed to the air lubrication device 120 may, for example, be pressurised air, or exhaust gas, such as humid air, of the fuel cell.

Embodiments of the present disclosure allow for providing both a fuel cell as well as an air lubrication device with a pressurised fluid while only requiring one compressor or compressor system for this purpose. The air supply apparatus of the present disclosure is less complex and simpler to implement compared to prior art systems. Moreover, the present air supply apparatus reduces the air compression work and thus energy consumption required for pressurising both the fuel cell and the air lubrication device. In case of a compressor and an air lubrication device already being present on a ship, the air supply apparatus can be retrofit to the already existing system, as also discussed further below. In such a case, energetically speaking, the fuel cell is thus pressurised "for free". The fuel cell may be provided on the ship for various purposes, e.g. the fuel cell may be used for ship propulsion, but also for other purposes, such as powering other electrical devices on the ship. The air supply apparatus of the present disclosure may be put into practice regardless of the purpose for installing the fuel cell on the ship. The air supply apparatus of the present disclosure can allow for shutting down the air lubrication system in certain circumstances (such as in case the ship is not moving) while keeping the fuel cell(s) in operation with pressurised fluid and while preferably recovering at least some of the energy of the pressurised fluid (as described further below).

According to an embodiment, an exhaust gas outlet 111 of the fuel cell 110 is connected with the air lubrication device 120 via an exhaust gas line 112 of the pressurised line system for supplying exhaust gas to the air lubrication device 120. Figures 1, 2a, 2b and 3 illustrate examples of such embodiments. By supplying exhaust gas of the fuel cell to the air lubrication device, the addition of an expander or turbine downstream of the fuel cell for recovering a fraction of the pressure enthalpy is not necessarily required, as the pressurised fluid is further used for the air lubrication device. Further usage of the pressurised fluid for the air lubrication device results in less efficiency losses, as thermodynamic transformation (between different forms of energy) is reduced, and the mechanical complexity of the air supply apparatus is reduced.

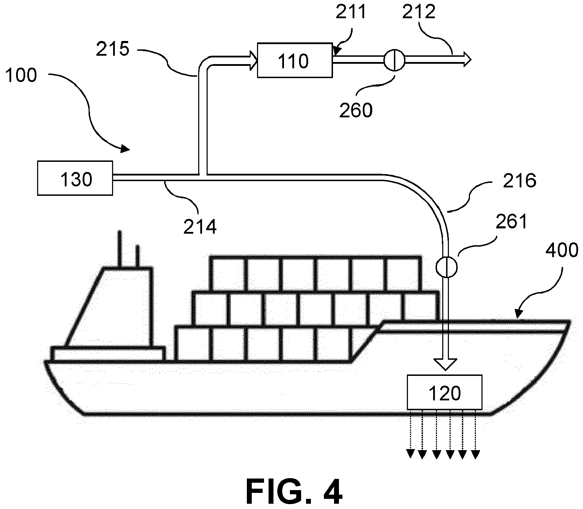

According to another embodiment, a compressor outlet of the compressor 130 is connected with the air lubrication device 120 via a bifurcated intake gas line 214 of the pressurised line system for supplying pressurised fluid from the compressor outlet to the air lubrication device 120. In this embodiment, the pressurised fluid may typically be pressurised air. An exemplary embodiment thereof is illustrated, for example, in Figure 4. According to a preferred embodiment, a bifurcation corresponds to at least two branch-off lines which do not unite or merge further downstream of the bifurcation. In this embodiment, the pressurised fluid or exhaust gas originating from the fuel cell 110 may preferably not be conveyed to the air lubrication device 120. Instead, the pressurised fluid or exhaust gas originating from the fuel cell 110 may be used for other purposes, such as recovering a fraction of the pressure enthalpy.

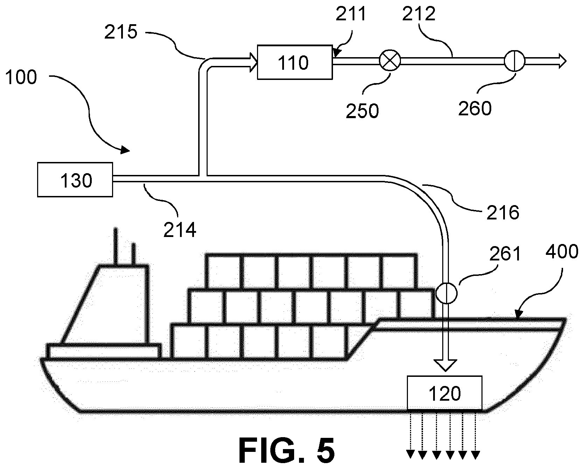

The bifurcated intake gas line 214 may include a first branch-off intake line 215 connected to the fuel cell 110 and a second branch-off intake line 216 connected to the air lubrication device 120. Figures 5 to 7 show examples of the first and second branch-off intake lines 215, 216.

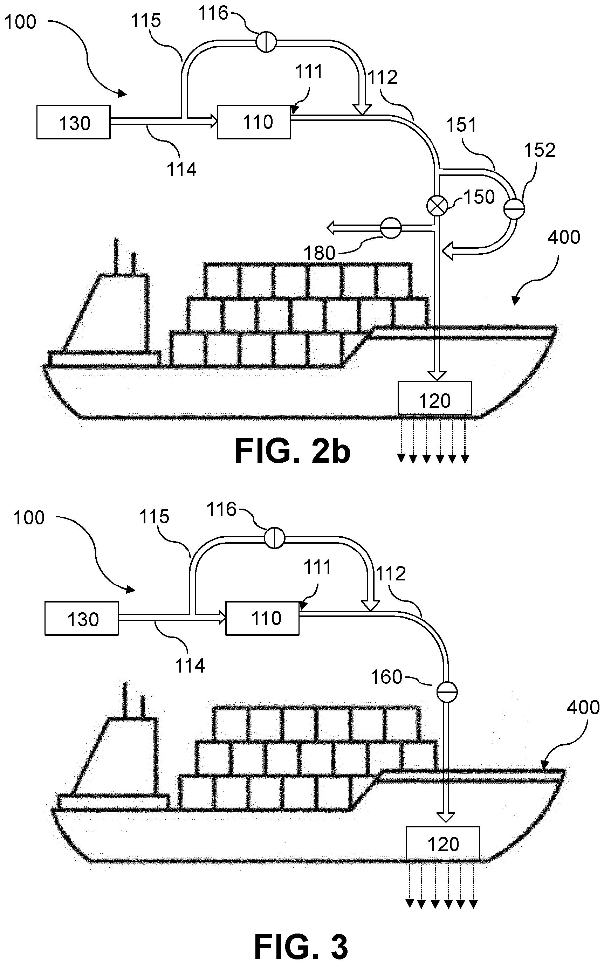

According to embodiments, which can be combined with other embodiments described herein, the air supply apparatus 100 further includes a fuel cell bypass 115 connected to the pressurised line system, in particular the bifurcated intake gas line 214 or an intake gas line 114 and the exhaust gas line 112. Figure 2a illustrates an exemplary embodiment including a fuel cell bypass 115 connected to an intake gas line 114. With further reference to Figures 2a and 3, the air supply apparatus may include a fuel cell bypass flow control device 116 configured for independently controlling a flow of the pressurised fluid to the fuel cell 110. The fuel cell bypass flow control device 116 may optionally be further configured for controlling a flow of the pressurised fluid to the air lubrication device 120. The fuel cell bypass flow control device 116 may preferably be a valve, or a flap. The fuel cell bypass flow control device 116 allows for setting the pressure as desired for a specific operation mode.

In one embodiment, the air supply apparatus may further include a blow-off valve 180 for releasing pressurised fluid. Examples of a blow-off valve 180 are illustrated in Figures 2a and 2b. The blow-off valve 180 allows for releasing substantial portions of the pressurised fluid or even the entire overpressure to the atmosphere in case it is not desired to pressurise one or more of the components of the air supply apparatus. Illustratively, the blow-off valve 180 may be connected to the exhaust gas line 112, 212. For example, in case pressurising of the fuel cell is required for a certain application, but pressurising of the air lubrication device is undesired (e.g. in case the ship is not moving), the pressurised fluid may be released before being injecting into the air lubrication device 120. The blow-off valve 180 may be arranged downstream of the fuel cell 110 and/or upstream of the air lubrication device 120. The air supply apparatus may further include a blow-off outflow line connected the exhaust gas line 112, 212. The blow-off valve 180 may be arranged in the blow-off outflow line.

In one exemplary embodiment, the blow-off valve 180 and/or the blow-off outflow line may be arranged upstream of a turbine 150 (described in more detail further below) and/or upstream of a turbine bypass 151 (described in more detail further below). An example of a blow-off valve 180 being arranged upstream of the turbine 150 is illustrated in Figure 2a.

In another exemplary embodiment, the blow-off valve 180 and/or the blow-off outflow line may be arranged downstream of the turbine 150 (described in more detail further below) and/or upstream of the turbine bypass 151 (described in more detail further below) merging or uniting with the exhaust gas line 112, 212. An example of a blow-off valve 180 being arranged downstream of the turbine 150 is illustrated in Figure 2b. This allow for recovering back pressure energy/enthalpy in case the fuel cell is pressurised, and the air lubrication device is not in use (e.g. if the ship is not moving or to avoid any potential damage in case the ship is in a port or a shallow seabed).

According to embodiments, which can be combined with other embodiments described herein, the air supply apparatus 100 further includes a flow control device 160, 260, 261. The flow control device 160, 260, 261 is preferably a valve or a flap. For example, the flow control device 160, 260, 261 may be a throttle valve. Each of Figures 3 to 7 illustrate examples of the flow control device 160, 260, 261. The flow control device 160, 260, 261 is preferably arranged downstream of the fuel cell 110 and/or upstream of the air lubrication device 120. The flow control device 160, 260, 261 is preferably arranged downstream of the fuel cell bypass 115 merging or uniting with the exhaust gas line 112, 212. Preferably, the flow control device 160, 260, 261 is connected to the exhaust gas line 112, 212 and/or the second branch-off intake line 216. The flow control device 160, 260, 261 may allow for adjusting the flow in the first and second branch-off intake lines 215, 216, and thus the flow of pressurised fluid injected respectively to the fuel cell 110 and the air lubrication device 120. The flow control device 160, 260, 261 being connected to the exhaust gas line 112, 212 (as illustrated for example in Figure 3) allows for the possibility of controlling the charging pressure of the fuel cell 110 independently from the air lubrication device pressure. The pressure required for the air lubrication device is typically determined by the draft depth of the ship.

In one embodiment, the air supply apparatus 100 further includes a turbine 150, 250 connected to the exhaust gas line 112, 212. The turbine is illustrated in Figures 2a and 5-7. The turbine is arranged downstream of the fuel cell 110 and/or upstream of the air lubrication device 120. The turbine is preferably arranged upstream of the flow control device 160, 260, 261 (if present). The turbine 150, 250 is preferably arranged downstream of the fuel cell bypass 115 merging or uniting with the exhaust gas line 112, 212. The turbine 150, 250 allows for recovering a fraction of the energy of the exhaust gas originating from the fuel cell 110. For example, in case the exhaust gas is released to the atmosphere, the turbine 150, 250 allows for recovering a fraction of the energy. In case the exhaust gas is conveyed to the air lubrication device 120, the air supply apparatus 100 may also include the turbine 150, 250. The air lubrication device typically has lower pressure requirements compared to the fuel cell 110. Therefore, a fraction of the energy may be recovered by the turbine 150, 250, while still ensuring a pressure high enough for operating the air lubrication device 120. Moreover, the turbine allows for adjusting the charging pressures of fuel cell and air lubrication device independently, for example depending on the requirements due to the speed of the ship, the fuel cell load, or conditions of navigation. The turbine 150, 250 is preferably provided in series to the flow control device 160, 260, 261 and/or in parallel with the blow-off valve 180 and the blow-off outflow line.

In case the air supply apparatus 100 includes a turbine 150, 250, the air supply apparatus 100 may further comprise a turbine bypass 151 and a turbine bypass valve 152. The turbine bypass 151 is illustrated in Figure 2a. The turbine bypass may be connected to the exhaust gas line 112. The turbine bypass 151 and/or the turbine bypass valve 152 allow for limiting the pressure reduction resulting from recovering energy by the turbine.

The turbine 150 may be a fixed geometry turbine and optionally include a turbine bypass 151 and a turbine bypass valve 152. Alternatively, the turbine 150 may be a variable geometry turbine 150 and optionally include a turbine bypass 151 and a turbine bypass valve 152.

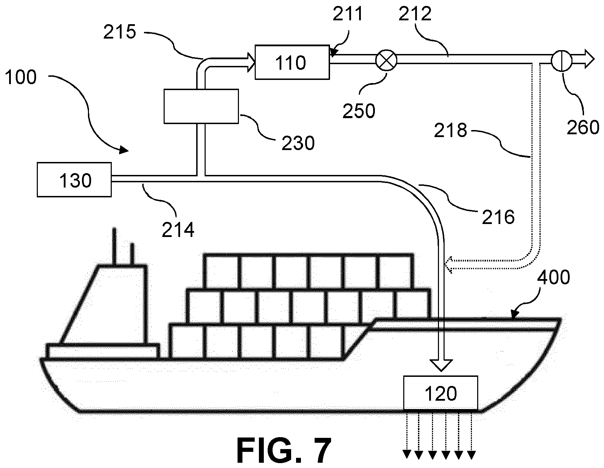

According to embodiments, which can be combined with other embodiments described herein, the air supply apparatus 100 further includes a high-pressure compressor 230 arranged downstream of the compressor 130 and upstream of the fuel cell 110 for providing the fuel cell 110 with pressurised fluid. An example of a high-pressure compressor is illustrated in Figure 7. Typically, the high-pressure compressor 230 is arranged in the first branch-off intake line 215. In many applications, the fuel cell requires higher pressures compared to the air lubrication system, or even higher pressures than the maximal pressure offered by a one-stage compression process. The compressor 130 in connection with the high-pressure compressor 230 may be regarded as a two-stage compressor. In this embodiment, the compressor 130 may also be referred to as low-pressure compressor. The two-stage compressor ensures that the charging pressure is sufficiently high for the fuel cell 110.

The air supply apparatus 100 may further include an intercooler arranged between the (low-pressure) compressor 130 and the high-pressure compressor 230. Stated differently, an intercooler may be arranged in the first branch-off intake line 215 upstream of the high-pressure compressor 230. Beneficially, the intercooler improves the compression efficiency.

In one exemplary embodiment, the air supply apparatus 100 may include the high-pressure compressor 230 according to any embodiment described herein, and the turbine 150, 250 according to any embodiment described herein. Figure 7 illustrates an exemplary embodiment including the high-pressure compressor 230 and the turbine 250. For example, the high-pressure compressor 230 may provide pressurised fluid to the fuel cell with a pressure of 4 bar or more, whereas the exhaust gas originating from the fuel cell may be released to the atmosphere, or is provided to the air lubrication device, which may typically only require pressurised fluids having a pressure of 1.5 or 2 bar, for example. Combining the high-pressure compressor 230 with the turbine 150, 250 is particularly advantageous for recovering energy from the high-pressure fluid generated by the high-pressure compressor 230.

In one embodiment, the high-pressure compressor 230 is configured for supplying the pressurised fluid to the air lubrication device 120 via the fuel cell 110. In one embodiment, the exhaust gas line 212 of the fuel cell 110 is connected with the bifurcated intake gas line 214, and in particular the second branch-off intake line 216. This connection line 218 is sketched by the dotted lines on the right-hand side of Figure 7. The air supply apparatus 100 may further include at least one of a valve, a flap and a further turbine arranged within the connection line 218 (not shown in Figure 7). Additionally or alternatively, the second branch-off intake line 216 may further include the flow control device 160, 260, 261 and/or the turbine 150, 250 upstream of the air lubrication device 120 (not shown in Figure 7).

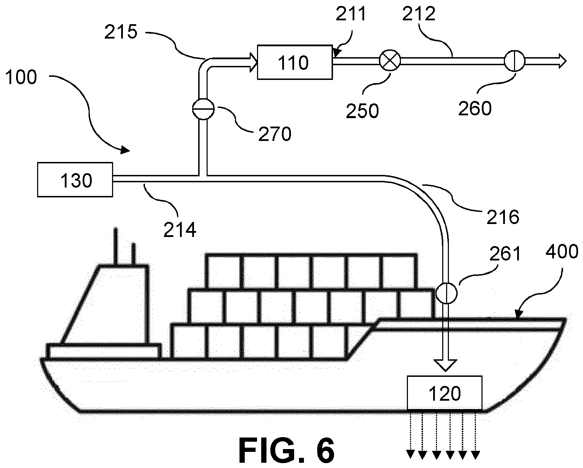

The air supply apparatus 100 may include an inflow control device 270. For example, an inflow control device is illustrated in Figure 6. The inflow control device 270 may be arranged downstream of the compressor 130 and upstream of the fuel cell 110. The inflow control device 270 is preferably arranged in series with the fuel cell 110 and/or arranged in the first branch-off intake line 215 or in the intake gas line 114. The inflow control device 270 is preferably arranged upstream of the fuel cell bypass 115. The inflow control device 270 may be configured for controlling a charging pressure of the fuel cell 110. In a preferred embodiment, the inflow control device 270 is at least one of a valve, a flap and a second turbine.

The air supply apparatus 100 may include a second turbine bypass and/or a second turbine bypass valve in embodiments, in which the inflow control device 270 is a second turbine. The second turbine bypass is configured for bypassing the second turbine. It is noted that the air supply apparatus 100 may include the second turbine and/or the second turbine bypass and/or the second turbine bypass valve without including the (first) turbine and/or the (first) turbine bypass and/or the (first) turbine bypass valve. The turbines differ in that the (first) turbine is preferably connected to the exhaust gas line 112, 212, whereas the second turbine 270 is preferably arranged upstream of the fuel cell 110.

In the following, some preferred embodiments of the invention will be summarised:
1) The air supply apparatus 100 according to any embodiment disclosed herein, including the compressor 130, the fuel cell 110, the air lubrication device 120, the turbine 150, 250, and the flow control device 160, 260, 261.

The turbine 150, 250, and the flow control device 160, 260, 261 are connected to the exhaust gas line 112, 212. The flow control device 160, 260, 261 is preferably a valve. The flow control device 160, 260, 261 is arranged downstream of the turbine 150, 250. The exhaust gas line 112, 212 may optionally be a bifurcated exhaust gas line having a first branch-off exhaust gas line and a second branch-off exhaust gas line. The turbine 150, 250, the flow control device 160, 260, 261, and the air lubrication device 120 may be arranged in series in the first branch-off exhaust gas line. The second branch-off exhaust gas line may include a third turbine and a further flow control device. The second branch-off exhaust gas line, and in particular the further flow control device, may be configured for directly releasing the pressurised fluid to the atmosphere. The further flow control device is preferably arranged downstream of the third turbine.

2) The air supply apparatus 100 according to any embodiment disclosed herein, including the compressor 130, the fuel cell 110, the air lubrication device 120, the turbine 150, 250, and the flow control device 160, 260, 261. The turbine 150, 250, and the flow control device 160, 260, 261 are connected to the exhaust gas line 112, 212. The flow control device 160, 260, 261 is preferably a valve. The flow control device 160, 260, 261 is arranged downstream of the turbine 150, 250. The exhaust gas line 112, 212 may optionally be a bifurcated exhaust gas line having a first branch-off exhaust gas line and a second branch-off exhaust gas line. The turbine 150, 250 may be arranged upstream of the bifurcation. The flow control device 160, 260, 261, and the air lubrication device 120 may be arranged in series in the first branch-off exhaust gas line. The second branch-off exhaust gas line may include a further flow control device. The second branch-off exhaust gas line, and in particular the further flow control device, may be configured for directly releasing the pressurised fluid to the atmosphere.

3) The air supply apparatus 100 according to any embodiment disclosed herein, including the compressor 130, the fuel cell 110, the air lubrication device 120, the turbine 150, 250, and the flow control device 160, 260, 261. The turbine 150, 250, and the flow control device 160, 260, 261 are connected to the exhaust gas line 112, 212. The flow control device 160, 260, 261 is preferably a valve. The exhaust gas line 112, 212 may optionally be a bifurcated exhaust gas line having a first branch-off exhaust gas line and a second branch-off exhaust gas line. The flow control device 160, 260, 261, and the air lubrication device 120 may be arranged in series in the first branch-off exhaust gas line. The second branch-off exhaust gas line may include the turbine 150, 250 and a further flow control device. The further flow control device 160, 260, 261 is arranged downstream of the turbine 150, 250. The second branch-off exhaust gas line, and in particular the further flow control device, may be configured for directly releasing the pressurised fluid to the atmosphere.

According to embodiments, which can be combined with other embodiments described herein, the fuel cell 110 is connected to a fuel supply. The fuel supply is configured for providing the fuel cell 110 with fuel. In particular, the fuel can be at least one of hydrogen, methane, methanol, ammonia or any other suitable fuel. Accordingly, compared to conventional fuels used in marine transportation such as heavy oil, eco friendliness can be improved.

The air supply apparatus 100 may further include at least one component selected from an after burner, an oxidizer, a heat exchanger, and a recirculation device. Typically, the at least one component is connected to the exhaust gas line 112. Providing one or more of the further components as described herein may be beneficial for improving the performance of the air supply apparatus, particularly the global system. It is to be understood that each of the at least one component can be arranged in series or parallel. For instance, the flow control device 160, 260, 261 may be provided in series to the at least one component, particularly downstream of the at least one component 150. Alternatively, the flow control device 160, 260, 261 can be provided in parallel to the at least one component.

According to embodiments, which can be combined with other embodiments described herein, the fuel cell 110 is a proton exchange membrane fuel cell (PEMFC) or a solid oxide fuel cell (SOFC) or, a fuel cell hybrid system or any other fuel cell type, particularly any other fuel cell for mobile applications.

According to embodiments, which can be combined with other embodiments described herein, an air supply apparatus 100 may include a plurality of fuel cells and/or a plurality of air lubrication devices. Each of the plurality of fuel cells and/or the plurality of air lubrication devices may be connected to the pressurised line system and/or may be in fluid communication with the compressor. The compressor 130 may be configured for providing pressurised fluid to each of the plurality of fuel cells and/or the plurality of air lubrication devices.

According to another aspect of the present disclosure a ship 200 including an air supply apparatus 100 according to any embodiments described herein is provided. Thus, a ship with a more efficient end more ecofriendly system for water-hull friction reduction can be provided, which can reduce the overall operation costs. In the present disclosure, the term "ship" may also include a boat or any other watercraft.

In another aspect of the present disclosure, a method of installing a fuel cell in an air supply apparatus for a ship is provided. The air supply apparatus includes an air lubrication device for resistance reduction of the ship, and a compressor for providing the air lubrication device with pressurised fluid. The method may include providing the fuel cell and a pressurised line system having an intake gas line or a bifurcated intake gas line and an exhaust gas line. The method further includes connecting the compressor outlet and an inlet of the fuel cell via an intake gas line or a bifurcated intake gas line. The method includes connecting an inlet of the air lubrication device with an exhaust gas outlet of the fuel cell via an exhaust gas line or connecting an inlet of the air lubrication device with the compressor outlet via the bifurcated intake gas line.

The method may include the air supply apparatus, the fuel cell, and the pressurised line system according to any embodiment described herein. Furthermore, the method may include installing any of the components according to any embodiment described herein in any of the locations (i.e. the position within the pressurised line system and upstream/downstream of other components) described herein. For example, the method may further include installing a turbine, and/or a flow control device.

Hence, in view of the above, it is to be understood that compared to the state of the art, the embodiments described herein beneficially provide for improved energy efficiency and eco friendliness, such that CO₂ emission and operation costs can be reduced.

Aspects and embodiments of the invention may be defined by the following clauses:
Clause 1. An air supply apparatus for a ship, comprising:
   - a fuel cell, and
   - an air lubrication device for resistance reduction of the ship,
   wherein an exhaust gas outlet of the fuel cell is connected with the air lubrication device via an exhaust gas line for supplying exhaust gas to the air lubrication device.
Clause 2. The air supply apparatus of clause 1, wherein the fuel cell is connected to a compressor for providing the fuel cell with pressurised air. Clause 3. The air supply apparatus of clause 1 or 2, wherein the fuel cell is connected to a fuel supply for providing the fuel cell with fuel, particularly the fuel being at least one of hydrogen, methane, methanol, ammonia or any other suitable fuel.
Clause 4. The air supply apparatus of any of clauses 1 to 3, further comprising at least one component selected from an after burner, an oxidizer, a turbine, an expander, a heat exchanger, a throttle, particularly a flap, and a recirculation device, wherein the at least one component is connected to the exhaust gas line.
Clause 5. The air supply apparatus of any of clauses 1 to 4, further comprising a flow control device connected to the exhaust gas line, particularly the flow control device being a valve or a flap.
Clause 6. The air supply apparatus of clauses 4 and 5, wherein the flow control device is provided in series to the at least one component, particularly downstream of the at least one component, or wherein the flow control device is provided in parallel to the at least one component.
Clause 7. The air supply apparatus of any of clauses 1 to 6, wherein the fuel cell is a proton exchange membrane fuel cell (PEMFC) or a solid oxide fuel cell (SOFC) or any other fuel cell for mobile applications.
Clause 8. A ship comprising an air supply apparatus according to any of clauses 1 to 7.
Clause 9. A method of supplying air to an air lubrication device of a ship, comprising:
   - supplying exhaust gas from a fuel cell to the air lubrication device.
Clause 10. The method of clause 9, further comprising providing the fuel cell with pressurised air.
Clause 11. The method of clause 9 or 10, further comprising guiding the exhaust gas through at least one component selected from an after burner, an oxidizer, a turbine, an expander, a heat exchanger, a throttle, particularly a flap, and a recirculation device, prior to ejecting the exhaust gas from the air lubrication device.
Clause 12. The method of any of clauses 9 to 11, further comprising controlling the exhaust gas flow provided to the air lubrication device by using a flow control device, particularly a valve or a flap.
Clause 13. The method of any of clauses 9 to 12, further comprising using an air supply apparatus according to any of claims 1 to 7.

While the foregoing is directed to embodiments, other and further embodiments may be devised without departing from the basic scope, and the scope is determined by the claims that follow.

### REFERENCE NUMERALS

- 100: air supply apparatus
- 110: fuel cell
- 111, 211: exhaust gas outlet
- 112, 212: exhaust gas line
- 114: intake gas line
- 115: fuel cell bypass
- 116: fuel cell bypass flow control device
- 120: air lubrication device
- 130: compressor
- 150, 250: turbine
- 151: turbine bypass
- 152: turbine bypass valve
- 160, 260, 261: flow control device
- 180: blow-off valve
- 214: bifurcated intake gas line
- 215: first branch-off intake line
- 216: second branch-off intake line
- 230: high-pressure compressor
- 270: inflow control device
- 400: ship

## Claims

1. An air supply apparatus (100) for a ship (400), comprising:
- a fuel cell (110);
- an air lubrication device (120) for resistance reduction of the ship (400);
- a compressor (130) connected to a pressurised line system (112, 114, 212, 214, 215, 216) for providing pressurised fluid to the pressurised line system (112, 114, 212, 214, 215, 216), wherein
the pressurised line system (112, 114, 212, 214, 215, 216) is connected to the fuel cell (110) for providing the fuel cell (110) with pressurised fluid from the compressor (130), and wherein
the pressurised line system (112, 114, 212, 214, 215, 216) is further connected to the air lubrication device (120) for providing pressurised fluid to the air lubrication device (120).

2. The air supply apparatus (100) of claim 1, wherein an exhaust gas outlet (111) of the fuel cell (110) is connected with the air lubrication device (120) via an exhaust gas line (112) of the pressurised line system (112, 114, 212, 214, 215, 216) for supplying exhaust gas to the air lubrication device (120).

3. The air supply apparatus (100) of any one of the preceding claims, wherein a compressor outlet of the compressor (130) is connected with the air lubrication device (120) via a bifurcated intake gas line (214) of the pressurised line system (112, 114, 212, 214, 215, 216) for supplying pressurised fluid from the compressor outlet to the air lubrication device (120).

4. The air supply apparatus (100) of any one of the preceding claims, further comprising a fuel cell bypass (115) connected to the pressurised line system (112, 114, 212, 214, 215, 216), in particular the bifurcated intake gas line (214) or an intake gas line (114) and the exhaust gas line (112).

5. The air supply apparatus (100) of any one of the preceding claims, wherein the bifurcated intake gas line (214) includes a first branch-off intake line (215) connected to the fuel cell (110) and a second branch-off intake line (216) connected to the air lubrication device (120).

6. The air supply apparatus (100) of any one of the preceding claims, further comprising a flow control device (160, 260, 261), preferably connected to the exhaust gas line (112, 212) or the second branch-off intake line (216), particularly the flow control device (160, 260, 261) being a valve or a flap; and/or further comprising a blow-off valve (180) for releasing pressurised fluid, wherein preferably the blow-off valve (180) is connected to the exhaust gas line (112, 212).

7. The air supply apparatus (100) of any one of the preceding claims, further comprising a turbine (150, 250) connected to the exhaust gas line (112, 212), and optionally wherein the turbine (150, 250) is provided in series to the flow control device (160, 260), particularly upstream of the flow control device (160, 260, 261).

8. The air supply apparatus (100) of claim 7, further comprising a turbine bypass (151) and a turbine bypass valve (152), in particular connected to the exhaust gas line (112); and/or wherein the blow-off valve (180) is arranged downstream of the turbine (150) and/or upstream of the turbine bypass (151) merging or uniting with the exhaust gas line 112, 212.

9. The air supply apparatus (100) of any one of the preceding claims, further comprising an inflow control device (270) arranged downstream of the compressor (130) and upstream of the fuel cell (110) for controlling a charging pressure of the fuel cell (110), particularly wherein the inflow control device (270) is at least one of a valve, a flap and a second turbine.

10. The air supply apparatus (100) of any one of the preceding claims, further comprising a high-pressure compressor (230) arranged downstream of the compressor (130) and upstream of the fuel cell (110) for providing the fuel cell (110) with pressurised fluid; and optionally further comprising an intercooler arranged between the compressor (130) and the high-pressure compressor (230).

11. The air supply apparatus (100) of claim 10, wherein the high-pressure compressor (230) is configured for supplying the pressurised fluid to the air lubrication device (120) via the fuel cell (110).

12. The air supply apparatus (100) of any one of the preceding claims, wherein the fuel cell (110) is connected to a fuel supply for providing the fuel cell (110) with fuel, particularly the fuel being at least one of hydrogen, methane, methanol, ammonia or any other suitable fuel.

13. The air supply apparatus (100) of any one of the preceding claims, wherein the fuel cell (110) is a proton exchange membrane fuel cell (PEMFC) or a solid oxide fuel cell (SOFC), a fuel cell hybrid system or any other fuel cell for mobile applications.

14. A ship (400) comprising an air supply apparatus (100) according to any one of the preceding claims.

15. A method of installing a fuel cell (110) in an air supply apparatus (100) for a ship (400), the air supply apparatus (100) comprising an air lubrication device (120) for resistance reduction of the ship (400), and a compressor (130) for providing the air lubrication device (120) with pressurised fluid, the method comprising:
- connecting the compressor outlet and an inlet of the fuel cell (110) via an intake gas line (114) or a bifurcated intake gas line (214); and
- connecting an inlet of the air lubrication device (120) with an exhaust gas outlet (111) of the fuel cell (110) via an exhaust gas line (112, 212); or connecting an inlet of the air lubrication device (120) with the compressor outlet via the bifurcated intake gas line (214).
